# EUROPEAN PATENT APPLICATION

(11) **EP 1 088 937 A1**
(43) Date of publication of application: **04.04.2001**
(21) Application number: 00120995.6
(22) Date of filing: 27.09.2000
(51) Int. Cl.: D21H 11/12, D21C 5/00, D21C 3/26

(54) **Process for preparing high quality paper from vegetable residuals**

(30) Priority: 28.09.1999 IT VA990027
(71) Applicant: Geopolimeri S.r.l., 36028 Rossano Veneto, VI (IT)
(72) Inventor: Nicolucci, Clemente, 36028 Rossano Veneto VI (IT); Bertolini, Francesco, 36028 Rossano Veneto VI (IT)

(57) **Abstract**

A process is disclosed for the chemical and physical treatment of an aqueous suspension having from 5% to 30% of dry content of residuals from alimentary or industrial use of pineapple, coconut, tamarind, bagasse, sorghum, corn, abaca or rice, and that of aquatic origin such as fresh white water-lily or the seashore vegetables varieties such as Posidonia, so to permit their use in the production of paper and board.

## Description

The present invention refers to the use of those natural vegetable residuals widely diffused in the equatorial zone and which, with this technology, become useful for producing new pulps, papers or boards.

In particular, the residuals resulting from the food or industrial use of pineapple, coconut, tamarind, bagasse i.e. the residual of sugar-cane processing, sorghum, corn, abaca or rice, and that of super-abundant kinds of aquatic origin, such as fresh white water-lily or the ocean seashore vegetable varieties such as Posidonia. When tested according to that described in the present invention, these vegetable residuals and surplus give rise to quality fibre materials that are inexpensive and have a lower environmental impact. These fibre materials can be used to produce high quality papers, boards and fibre panels. These cellulose fibres are obtained without requiring huge amounts of chemical products or lengthy heat treatments at high temperatures and high pressures. The cellulose fibres, papers and boards obtained are of good quality.

According to the industrial size of the productive activity, be it the cottage industry or industrial type, preference will be given to a rapid elementarization in an alkaline system or rapid elementarization with micro-organisms. Both cases offer a better environmental impact, based on a substantial reduction in emissions of pollutant gases, liquids and solids.

According to the present invention the process offers a drastic reduction, with respect to the present state of the art, in pollutant refluents together with big energy-saving and a considerable reduction in the use of chemical products. Unlike the methods traditionally used for producing cellulose fibres for paper, no pollutant chemical compounds are generated and the refluents are easily reinstated in the natural cycles. Even the health of production workers and users is better safeguarded. The low toxicity of the products used compared to those normally used in traditional processes simplifies its use, thus contributing to reduced running costs.

The small-scale production process according to the invention is characterized by savings in chemical products and energy production with a reduction of pollutant emissions.

This process has a reduced amortization cost of production plants thus enabling competition with the big industrial plants existing in the world's industrialized north.

The manual-artisan process used in equatorial zones for producing paper and board from local vegetable species, i.e. the present state of the art, is characterized by a highly negative environmental impact. The negative environmental impact depends both on the use of huge proportions of caustic soda used to solubilize the substances binding the fibres and enabling their elementarization, and on the use of sodium hypochlorite or of chlorine derivatives as bleaching agents. The traditional process discharges in the waste waters highly alkaline pollutant residuals mixed together with organic substances in solution in both the raw pulp cooking waters and the washing waters.

The processes normally use sodium hypochlorite in considerable amounts for bleaching the cellulose fibres. This causes the emission of toxic gases and pollutant liquid emissions. According to the present invention, the method which we call the cottage method provides for the use of caustic potash instead of caustic soda and a subsequent stage of neutralizing the waste waters with phosphoric acid, thus forming an organic fertilizer rich in potassium phosphate which can be used in agriculture either alone or better still mixed with poultry droppings or with other animal droppings and/or urine.

Thus an exceptional fertilizer is obtained from two pollutants. With the use of an ordinary storage tank and the addition of phosphoric acid, the pollutants, both in solution and in dispersion in artisan paper-making systems become natural fertilizers that can be strengthened by adding nitrogenous pollutant residuals of a natural animal origin. This invention produces cellulose fibre for paper-making as well as fertilizers of high agricultural value. Even the bleaching process, which in the artisan state of the art resorts to the use of huge amounts of sodium hypochlorite, is replaced in the process according to the present invention, by a healthy and more environment-friendly process based on the use of hydrogen peroxide instead of sodium hypochlorite. Moreover, this method provides for the rapid reuse of vegetable residuals, which, if carried out before the drying of the residuals when these are still in the green or fresh state, gives rise to elementarized fibre which retains a pleasant light ivory colour instead of dark brown. The process for preparing paper according to the present invention uses a cellulose-fibre pulp obtained by:
a) grinding, for a period of from 6 to 36 hours and at a temperature of from 24° to 37°C, the vegetables used, pre-humidified with water in order to have from 5% to 30% dry content,
b) adding to the treated mass a water solution containing from 1% to 3% in weight of caustic potash,
c) treating the mixture obtained with a water solution of phosphoric acid until reaching a pH of from 8 to 5.5,
d) filtering the suspension obtained in order to separately collect a water solution and a solid mass which is dried and pressed to give said fibre pulp.

The artisan-industrial production of cellulose pulp according to the present invention uses a solution of caustic potash and/or natural micro-organisms and/or hydrogen peroxide instead of the caustic soda and hypochlorite solution.

The use of natural micro-organisms instead of caustic soda or caustic potash makes the process according to the present invention particularly interesting because the paper and board obtained does not contain caustic substances which would limit their uses in the food sector.

These micro-organisms are already present in the vegetable masses themselves but in some cases it is best to add to them a selection of the most effective and fastest families disintegrating encrustation and cohesioning fractions of the cellulose fibres contained in the vegetable substances.

In nature, these micro-organisms habitually carry out their natural recycling function of vegetables typical of the undergrowth.

It is well-known that some varieties of mushrooms, and among these also several varieties of food-grade mushrooms, live at the expense of woody elements and, in these families, research has isolated dozens of stocks useful for the elementarization of cellulose fibres, these often being lignin modifiers that can operate in relatively short times and which in the first stage of digestion do not significantly degrade the cellulose fibres.

This stage sees the easily managed and safe enzymes and micro-organisms working on the vegetable species diffused in the equatorial zone.

The humid equatorial zones have the advantage of naturally being at the temperature and humidity conditions (high) required by the present invention.

This process prefers the use of vegetable residuals of other uses such as Gramineae, which are used here preferably after recovering the food seeds, the coconut, after recovering the pulp intended for producing the relative oil, the sugar-cane, from which the sugar is extracted, and the white water-lily.

It is advisable to proceed with the cellulose fibre elementarization starting from the fresh material without subjecting it to predrying.

For certain varieties of vegetable mass such as the white water-lily, an insemination of the food macrofungus mycelium can be started first, then proceeding with the growth and harvesting of the macrofungus of which we wish to mention several varieties of plerotus and only after the elementarization of the cellulose fibres.

With these vegetable masses, the cellulose fibres can also firstly be extracted with mechanical and microbiological methods and inseminating and cultivating food mushrooms on the residual vegetable mass. In certain cases such as fibre sorghum, it is advisable to draw the vegetable mass before the formation of grain, thus avoiding the negative presence of huge amounts of starch. The disintegration process mixes a water dispersion of micro-organisms in the vegetable mass which, if maintained in conditions of high humidity instead of in water dispersion, can keep the vegetables at a dry-content of less 50%.

The vegetable mass must be turned over several times for every day of maceration. The time normally required to obtain good elementarization is two days at a temperature of from 24° to 37°C.

The high humidity and temperature typical of the climate of these geographic zones naturally favours and accelerates the enzymatic elementarization process. In these conditions particular insulation or temperature maintenance processes are not required.

These processes have an optimal working range at a temperature of between 24° and 37°C and the optimum humidity conditions are normally between 70% and 100%.

In the above mentioned vegetables it is useful to proceed with combing and/or decorticating, i.e. the mechanical removal of only those zones having the long fibres useful for textiles and paper making.

This stage obtains particularly high-quality fibres with very high paper yield and a far lower environmental impact compared to the state of the art in the paper industry sector.

These micro-organisms used on vegetables obtained from food residuals, pollutant vegetable surplus such as white water-lily, natural surplus such as sugar-cane and ocean seashore vegetable materials, enable the production of quality cellulose pulps at competitive prices.

If the cellulose pulps are obtained by rapidly disintegrating the fresh vegetable masses, i.e. from material that has never been dried, virgin fibres of excellent quality also characterized by a pleasant whitish colour are obtained without having to resort to chemical bleaching agents, in addition to saving considerable amounts of chemical and/or biological reagents.

Light in colour are also the fresh fibres of white water-lily, abaca, corn, sorghum, rice, wheat, sugar-cane, pineapple, coconut and tamarind. When well digested and elementarized, these fibres give rise to papers and fabrics that do not darken with drying.

Regarding the state of the art in paper making, small-scale simplified and very inexpensive systems are used. These micro-organisms transform the binding of the cellulose fibres into carbon dioxide and water, leaving these new and good quality cellulose pulps as a residual. The logic of recovery and reuse by operating in the natural undergrowth is thus exploited and transformed into a production process. The vegetable mass is loaded into a pulper (better still a high-density pulper) operating at a high work concentration equal to a dry-content of 15% plus or minus 10%.

The optimum temperature for elementarization of the fibre mass after a reasonable period of enzymatic digestion is 70°C for a mechanical dispersion time of 30 minutes, plus or minus 15 minutes.

In continuous industrial processes, the high-density pulper can be replaced or supplemented with a turbocooker operating continuously at high temperatures on the inside wall of between 140°C and 280°C. In this case the cellulose fibre elementanzation times are from 2 to 20 minutes. The cellulose fibres thus elementarized have excellent physical-mechanical characteristics, good workability and are easy to bleach finish i.e. can be bleached with hydrogen peroxide used at low concentrations or with its derivatives. The pollutant emissions load is over 75% lower than traditional processes.

The caustic potash should be used at less than 10% in weight of the vegetable mass calculated dry.

In not being treated with chlorine or chlorine derivatives, the cellulose, papers and boards obtained are healthy and do not release dioxin when burnt. These papers and boards have a wide variety of uses such as food wrappings and packaging, shoppers, printing and writing paper, photocopy paper, greeting cards, filter papers and bags, in addition to technical uses such as filter bags for vacuum cleaners and even papers for sanitary use.

To produce the pulps, the present invention uses the residuals of quickly renewable vegetables that are preferably fresh and possibly having a high-quality fibre content.

The residuals from this process obtained by mechanical, chemical and microbiological means, are recommended for producing humus and/or fertilizers of high value, and easily used for industrial cultivation. These new cellulose pulps give rise to papers and boards characterized by very high physical-mechanical qualities, better environment content, and positive aesthetic elements. This process transforms surplus and pollutant vegetables into useful new raw materials

This modern biotechnology makes paper products healthier, while drastically reducing pollutants resulting from the production process.

The liquid wastes obtained from these cellulose pulps are rich in natural-origin soluble polymers which, even in their integral composition, can be used as fertilizers, fuel, bonding and cohesioning thermopolymers. Surprizingly, these polymers in the concentrated form are suitable for replacing the phenol, ureic and melamine resins used in the production of plastic laminates and thermoshaped products.

Fibre panels obtained from corn fibre with the methods described in this process, and impregnated with equal dry on dry weight of corn polymer extracts, dried in the air and therefore thermopressed for 15 minutes at 150°C and 70 kg/cm2, can be shaped into attractive, dark ivory colour trays, having fairly good mechanical characteristics.

Fibre panels obtained from the shell of coconuts of average weight 1010 g/m2 were impregnated with natural polymer extracts coming from coconut shell and after drying had an average weight of 1890 g/m2.

These panels, thermoshaped at the conditions of 15 minutes by 150°C by 70 kg/m2 can be shaped into trays of colour and aspect similar to that of mahogany.

The fibre obtained from the residuals of coconut, pineapple, sorghum, corn, sugar-cane, white water-lily and many other vegetable species, if mechanically pre-separated by microbiological action or chemically are thus transformed into useful products often reaching outstanding quality levels making them useful for producing paper but also for producing fibre panels, textiles and non-woven fabrics.

The papers and boards produced as a result of the mechanical or enzymatic combing, separating the long fibres from the context of other material, pre-cutting these fibre masses with a recommended cutting distance greater than 10 mm, resulted in a considerably long cellulose fibre having high physical-mechanical properties.

The cellulose pulps most suitable for high-fibre and high-strength products were obtained from pineapple, coconut, tamarind, white water-lily, abaca, corn leaves, the stalk of sorghum. These papers are characterized by outstanding resistance to tearing, bending, torsion, and by a pleasant fibre formation.

The papers obtained from the other vegetable species used as described in the present invention resulted in papers having average physical-mechanical properties and in the cases of Saccorifera and Posidonia physical-mechanical characteristics and yield level are poor.

Before being used to make paper, all the cellulose pulps were sifted with a screen having 0.3 mm openings, in order to remove non-elementarized particles mainly consisting of zones approaching knots or zones where the agents softening the binders had difficulty in penetrating.

The cellulose pulps thus obtained were suitable for producing paper and board both as an exclusive fibre constituent and also when mixed together. These high-quality cellulose fibre pulps are excellent in extremely limited proportions of 5%/20% to improve the characteristics of pulps obtained from post-consumer recycled.

By adding to each recycle 10% of cellulose pulp obtained, for example from pineapple fibre cut to 15/20 mm, the physical-mechanical characteristics improved so much so as to give paper that can be recycled at least ten times, as opposed to the five times of the same paper but without the addition.

### EXAMPLES 1-6

The following experimental part shows how the cellulose pulps obtained from fresh vegetables, all left to macerate for 24 hours at temperature conditions fluctuating between a minimum of 24°C and a maximum of 37°C, pre-humidified with water in order to obtain an initial dry-content varying from 20% and 30% dry, solid state system, and turned over approximately every six hours for a time of about 24 hours in open tanks, covered with a plastic sheet, resulted in, thanks to the natural formation of micro-organisms demolishing the materials hardening and encrusting the cellulose fibres, an easily elementarizable vegetable mass by simple dispersion in a water solution made alkaline with caustic potash at a concentration of 2%. The digestion process can also be carried out in a liquid state system. This water dispersion normally has a dry concentration of less than 20% and recommended above 5% dry-content. In the samples examined, the vegetable mass, after microbiological digestion, at a ratio of 1:8 initial dry matter with respect to the elementarization water, was reheated to 50°C and kept strongly stirred in a lab pulper for a time of 30 minutes. After the thirty minutes a diluted solution of phosphoric acid was added with precaution until obtaining a pH value of between 8 and 5.5.

This neutralizing process was followed by removal of the elementarization liquid and by the following washing stages. An artisan washing system was used by fitting out the basket of an ordinary washing machine with the filtering fabric/cloth container bag. The filtering waters and the washing waters are collected, then the pH is adjusted by bringing it to values of between 7.5 and 6.0.

The solution thus obtained is in itself a fertilizer water. The fibre mass was firstly easily elementarized then cut to the average size of 10/20 mm and used for preparing the paper-making pulp. The paper-making pulp is made tip of a base of industrially bleached good quality short cellulose fibres of Portuguese-origin eucalyptus.

The reference bleached long-fibre conifer is of Canadian origin and was obtained from a high-quality standard production. The fibres coming from equatorial residuals pre-cut to an average length of approx. 15 mm were added to the eucalyptus pulps and refined for 15 minutes in a laboratory Valley hollander then the fibre suspension was used to produce small laboratory sheets on Rapid Koetten.

The experimental data are gathered in the following Tables 1 and 2.

**TABLE 1**

| Characteristics of the pulps used | | | | | | | |
|---|---|---|---|---|---|---|---|
| Description | Ref. Ex. | Ex. 1 | Ex. 2 | Ex. 3 | Ex. 4 | Ex. 5 | Ex. 6 |
| Type fibre | (A) | (B) | (C) | (D) | (E) | (F) | (G) |
| quantity g. | 150 | 150 | 150 | 150 | 150 | 150 | 150 |
| Eucalyptus fibre quantity g. | 800 | 800 | 800 | 800 | 800 | 800 | 800 |
| Starch and sizing agent quantity g. | 50 | 50 | 50 | 50 | 50 | 50 | 50 |
| Total g. | 1000 | 1000 | 1000 | 1000 | 1000 | 1000 | 1000 |

**TABLE 2**

| Characteristics of the paper obtained | | | | | | | | |
|---|---|---|---|---|---|---|---|---|
| Description | Unit Measure | Ref. Ex. | Ex. 1 | Ex. 2 | Ex. 3 | Ex. 4 | Ex. 5 | Ex. 6 |
| Type fibre | | (A) | (B) | (C) | (D) | (E) | (F) | (G) |
| Substance | G/m² | 100 | 100 | 100 | 100 | 100 | 100 | 100 |
| Thickness | Micron | 120 | 127 | 130 | 121 | 124 | 122 | 125 |
| Flotation (Pelikan 4001) | Min | > 5 | 5 | > 5 | > 5 | 5 | > 5 | > 5 |
| Brightness (Gurley 100 ml) | Sec | 110 | 85 | 90 | 90 | 85 | 100 | 120 |
| Permeability (Gurley 100 ml) | Sec | 60 | 30 | 25 | 45 | 55 | 70 | 40 |
| Whiteness | % | 82 | 74 | 68 | 75 | 75 | 70 | 76 |
| Tearing | | Poor | Excellent | Excellent | Good | Excellent | Excellent | Good |

| | | | | | | | | |
|---|---|---|---|---|---|---|---|---|
| (A) = Spruce | | | | | | | | |
| (B) = Pineapple | | | | | | | | |
| (C) = Coconut | | | | | | | | |
| (D) = Sorghum | | | | | | | | |
| (E) = Abaca | | | | | | | | |
| (F) = White water-lily | | | | | | | | |
| (G) = Bagasse | | | | | | | | |

## Claims

1. Process for preparing paper characterized by the use of a fibre cellulose pulp obtained by:
a) macerating for a time of from 6 to 36 hours and at a temperature of between 24° and 37°C, the vegetables used which are pre-humidified with water in order to obtain from 5% to 30% dry-content in the mass,
b) adding to the treated mass a water solution containing from 1% to 3% in weight of caustic potash,
c) treating the mixture obtained with a water solution of phosphoric acid until reaching a pH of between 8 and 5.5,
d) filtering the suspension obtained to separately collect a water solution and a solid mass, which is dried and pressed to give said fibre cellulose pulp.

2. Process as in claim 1. characterized by the fact that the vegetable mass used in stage a) is fresh.

3. Process as in claim 1. characterized by the fact that the vegetable mass used in stage a) is pre-dried.

4. Process as in claim 1. characterized by the fact that the vegetable mass used in stage c) of the process is obtained by:
a) macerating, for a time of from 6 to 36 hours and at a temperature of between 24 and 37°C, the vegetables used which are pre-humidified with water in order to obtain from 5% to 30% dry-content in the mass,
b) stirring at a temperature of between 50° and 90°C for a time of from 2 to 45 minutes and adding to the treated mass a water solution containing from 1% to 3% in weight of caustic potash.

5. Process as in claim 1 and 4 characterized by the fact that the water solution obtained by filtering as described in stage d), constitutes a good liquid fertilizer.

6. Process for preparing paper using a fibre cellulose pulp obtained by:
a) macerating, in the presence of natural digester micro-organisms for a time of between 6 and 36 hours and at a temperature of from 24° to 37°C, the vegetables used and pre-humidified with water in order to have from 5% to 30% dry-content in the mass,
b) treating the mixture obtained with a water solution of phosphoric acid until reaching a pH of between 8 and 5.5,
c) filtering the suspension obtained to separately collect a water solution and a solid mass, which is dried and pressed to give said fibre cellulose pulp.

7. Process as in claim 6. characterized by the fact that the vegetable mass used in stage a) is fresh.

8. Process as in claim 6. characterized by the fact that the vegetable mass used in stage a) is pre-dried.

9. Process as in claim 6 characterized by the fact that the water solution obtained by filtering as described in stage c), constitutes a good liquid fertilizer.

10. Process as in claim 6. characterized by the fact that the pH of the water solution of stage c) is brought to a value of between 8 and 5.5 and transformed into humus or fertilizers by means of mixing with natural nitrogenous substances and drying in the air.

11. Cellulose fibre pulp characterized by the fact that it is obtained from equatorial vegetable residuals such as pineapple, coconut, tamarind, bagasse, sorghum, corn, wheat, rice, abaca, fresh white water-lily and Posidonia.

12. Paper and board from equatorial vegetable-fibre materials characterized by the fact that said materials are used mixed together or with other cellulose pulps.

13. Filtering fibre panels of non-woven fabric obtained from cellulose fibre pulp obtained as in claim 7.

14. Cellulose pulps, papers and boards as per the previous claims, bleached by means of microbiological action and/or with hydrogen peroxide or its derivatives.
